# EUROPEAN PATENT SPECIFICATION

(11) **EP 1 457 338 B1**
(45) Date of publication and mention of the grant of the patent: **18.10.2006**
(21) Application number: 04012273.1
(22) Date of filing: 15.07.1998
(51) Int. Cl.: B41J 2/165, B41J 2/05, C09D 11/00

(54) **Methods and apparatus for preventing clogging in ink jet printer nozzles**
Verfahren und Gerät zur Verhinderung von Verstopfung der Tintenstrahldruckerdüsen
Méthodes et appareil prévenant des obstructions dans les buses d'imprimantes à jet d'encre

(30) Priority: 31.07.1997 US 903016
(43) Date of publication of application: 15.09.2004
(62) Divisional of application: 98935656.3
(73) Proprietor: ILLINOIS TOOL WORKS INC., Glenview Illinois 60026-1215 (US)
(72) Inventor: Rosenberger, John E., Plantsville, CT 06479 (US); Fox, James E., Cambridge CB1 3EG (US); Hudd, Alan L., Nuthampstead, Hertfordshire, SG8 8NG (GB)
(74) Representative: Heinze, Ekkehard

(56) References cited:
- US-A- 4 266 232
- US-A- 4 597 794
- US-A- 4 791 165
- US-A- 5 329 293

## Description

### Field of the Invention:

The present invention relates to ink jet printers and, more particularly, to methods and apparatus for preventing ink clogging in such devices.

### Background of the Invention:

Ink jet printing is performed by discharging ink droplets from a print head to a substrate. The droplets are ejected through orifices or nozzles in the print head and are directed to the substrate to form an image thereon. In contrast to many other types of printing, there preferably is no contact between the printer and the substrate with ink jet printing.

Most of the ink jet printers known in the art may be characterized as either continuous or impulse devices, depending upon the mechanism by which the ink droplets are directed to the substrate. In continuous ink jet systems, an essentially uninterrupted stream of ink is ejected from a nozzle and breaks up into droplets. The droplets bear an electric charge so that they can be deflected by an applied electric field which is modulated according to the particular image to be recorded. The electric field directs the droplets toward either the substrate or an ink re-circulating reservoir.

With so-called "impulse" or "drop-on-demand" ink jet printers, image formation is controlled by selectively energizing and de-energizing, for example, a piezoelectric transducer or solenoid rather than by modulating an applied electric field. Ink is stored in the print head or nozzle until it is necessary to form an image on the substrate. The printer is then activated by print signals to apply pressure to the ink and discharge a selected number of discrete ink droplets toward the substrate.

Because ink is ejected from impulse-type printers only periodically, these devices present a number of problems which typically are not encountered in continuous ink jet systems. These problems, which occur during the relatively short intervals between individual print signals during a single print cycle, include irregularly shaped drops and/or improper spacing of drops. The root cause of these problems may be attributable to movement of the ink meniscus at the time a print signal is generated, particularly where efforts are made to print at a frequency in excess of 3 KHz. One approach to these problems is presented by U.S. Patent 4,266,232, in the name of Juliana, Jr., *et al*., which discloses an impulse printer wherein ink drops of substantially uniform size and spacing are generated by applying drive pulses in a mutually synchronous fashion at every one of predetermined equal intervals. The amplitude of the drive pulses is controlled so that the amplitude of the drive pulse is below that of a print signal when no drop is to be formed. An even better approach is presented by U.S. Patent 4,459,601, in the name of Howkins, wherein a fill-before-fire mode of operation is disclosed, i.e., a pulse of predetermined length is used to initiate filling of the jet chamber and firing of a droplet occurs on the trailing edge of the pulse.

Certain other problems associated with impulse ink jet printers relate to the considerably longer intervals between print cycles. Unlike continuous ink jet printers, impulse devices typically are maintained in stand-by or quiescent modes for relatively long intervals, sometimes on the order of seconds, minutes, and even hours. During these intervals, ink is allowed to stand, thicken due to evaporation of ink components, and possibly clog the nozzles of the print head. Impulse printers may begin a printing cycle with such thickened material in place. Many of the start-up problems encountered with impulse printers are attributable to ink which has been allowed to clog the nozzles during quiescent periods. Ink clogging is less of a concern in continuous systems because there typically are fewer interruptions in the flow of ink and any such interruption is of considerably shorter duration. Even where ink is allowed to stand and solidify in a continuous ink jet printer, it is more easily purged due to the considerably higher pressures at which these devices operate.

A number of methods and apparatus are known in the art for preventing clogging in ink jet printers during quiescent periods. For example, U.S. Patent 4,970,527, in the name of Gatten, discloses an ink jet printer which prevents clogging by printing a few ink dots when the printer is idle. The method of Gatten, however, wastes both ink and printing substrate.

U.S. Patent 3,925,789, in the name of Kashio, discloses an ink jet recording device which comprises a timer for determining the length of a quiescent period and a means for preliminary ejecting ink from a nozzle if the quiescent period exceeds a predetermined amount of time. The ejected ink is not directed to a printing substrate but, rather, to an ink collector. U.S. Patent 4,540,997, in the names of Biggs, *et al*., discloses an ink jet printer wherein clogging is minimized by transporting the nozzles during quiescent periods to communicate with a wash station and then ejecting ink from the nozzles into the wash station if the printer has not functioned for a predetermined period of time.

U.S. Patent 5,329,293, in the name of Liker, discloses an ink jet printer apparatus according to the preamble of claim 1 wherein clogging is minimized by pulsing the ink in the nozzle during quiescent periods. The pulsing signal provided is less than the size of a pulse signal that would cause ink to eject from the nozzle. This techniques is referred to as sub-pulsing. The sub-pulsing method and apparatus are effective and efficient in preventing ink from clogging the nozzle. However, with some extremely fast-drying inks, the sub-pulsing leads to constant evaporation of solvents from the ink. As a result, all of the ink within the nozzle may suffer an increase in viscosity during the sub-pulsing period. Eventually the viscosity may increase too much and adversely effect the operation of the printer.

The document US-A-4,597,794 discloses a pigment type ink for use in ink jet printers. The conventional ink composition disclosed in document comprises a pigment particles, a glycol ether, acetone alcohol, and a polymer. The glycol ether, contained in the conventional composition, comprises a propylene glycol methyl ether. In the prior art, an ink composition is taken into account, which satisfies (among other things) ejection stability, storage stability for a long period, and fixability. For this purpose, an ink is prepared by dispersing fine particles of pigment into an aqueous dispersion medium containing a polymer having both a hydrophilic and hydrophobic construction potion. Further, polyhydric alcohols such as ethylene glycohols are incorporated in the conventional ink composition in order to improve various characteristics required of the pigment-type ink.

The document US 4,791,165 discloses an ink composition especially suitable for thermal ink-jet printers. In order to provide an ink composition having improved bubble formation and collapse on resistor surfaces, the conventional ink composition comprises a glycol, water, a polymer and a dye.

Therefore, there exists a need for relatively simple methods and apparatus for preventing ink jet clogging faster drying inks which do not waste ink or printing substrate and which do not require additional devices such as ink collectors and washing stations.

### Summary of the Invention

The present invention provides methods and apparatus for preventing clogging in impulse ink jet printers. It has been found in accordance with the invention that ink clogging during quiescent periods can be prevented by providing an ink that has the property of forming a barrier of higher viscosity ink where the ink contacts the ambient air. As a result, this viscosity barrier shields the remaining ink from the effects of air exposure during the quiescent period. Thereafter, the barrier is removed by a series of sub-pulses that rehomogenize the viscosity barrier and thereby clears the nozzle.

In a preferred embodiment, inkjet printers according to the invention comprise at least one nozzle having an orifice for ejecting ink droplets in response to a sequence of control signals, said sequence comprising firing signals and sub-firing signals, a chamber for containing an ink in fluidic communication with the orifice so that the ink forms a barrier of high viscosity ink at the orifice whenever the nozzle is in a quiescent state, control means for generating the sequence of control signals and for controlling the amplitude of the control signals. The control means generates a plurality of sub-firing signals after a predetermined period of quiescence. The sub-firing signals have amplitudes which are effective to remove, the barrier from the orifice yet which are ineffective to eject droplets of ink therefrom. The control means generates a plurality of firing signals after the generation of sub-firing signals for a second predetermined period of time. The firing signals have amplitudes which are effective to eject droplets of ink from the nozzle; whereas the sub-firing signals have amplitudes which are effective to remove the barrier from the orifice yet which are ineffective to eject droplets of ink therefrom.

This printer is operated by allowing the ink within the nozzle to be exposed to the ambient air during a quiescent period of a predetermined time period such that a barrier of higher viscosity forms in the ink near the orifice. Thereafter, before using the printer, a plurality of sub-pulsing signals are generated which are effective to remove the barrier yet which are ineffective to eject droplets of ink. After the barrier has been removed, a plurality of firing signals can be generated on demand to eject droplets of ink from said nozzle.

One representative ink exhibiting the desired fast-drying properties comprises a colorant, propylene glycol methyl ether, diacetone alcohol, and at least one resin selected from the group consisting of polyester resins and styrene acrylic resins. The propylene glycol methyl ether comprise about 44 % by weight of the ink. The diacetone alcohol comprises about 40.6 % by weight of the ink. The polyester resin comprises about 6.3 % by weight of the ink. And, the styrene acrylic resin comprises about 1.7 % by weight of the ink.

### Brief Description of the Drawings:

The numerous objects and advantages of the present invention may be better understood by those skilled in the art by reference to the accompanying figures, in which:
Figure 1 is a diagram showing an impulse ink jet printing apparatus according to the present invention.
Figure 2 is a diagram showing a firing signal applied to a print head nozzle and the movement of ink within the nozzle in response to the signal.
Figure 3 is a diagram showing a sub-firing signal applied to a print head nozzle and the movement of ink within the nozzle in response to the signal.
Figure 4 is a diagram of the barrier formed on the meniscus of the ink within the nozzle;
Figure 5 is a flowchart of the sequence of firing and sub-firing signals.

### Detailed Description of the Invention:

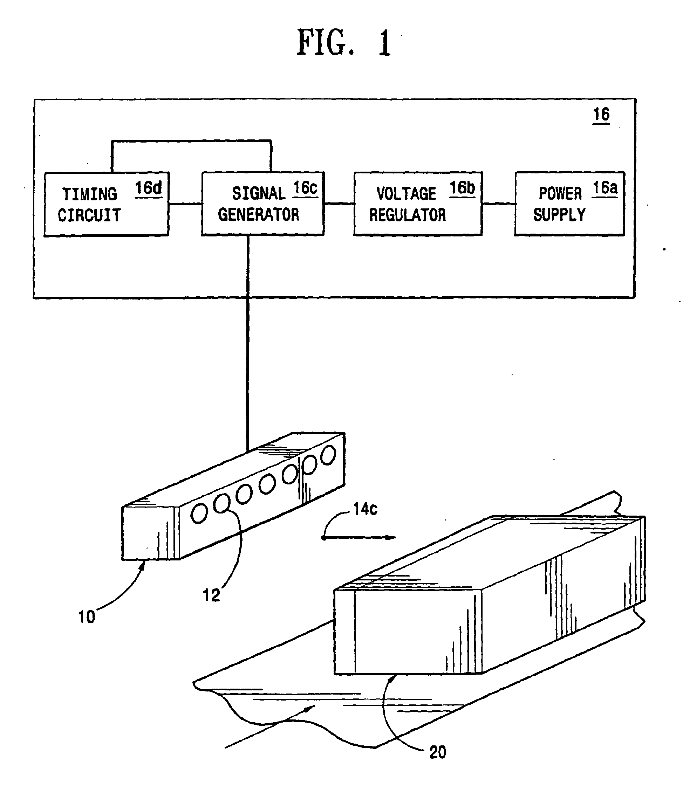

The methods and apparatus of the present invention can be used in conjunction with virtually any impulse or "drop-on-demand" ink jet printer which is subject to stand-by or quiescent periods. Referring to Figure 1, a representative printing apparatus according to the present invention is shown comprising a print head 10 having a plurality of nozzles 12 and control means 16 electrically coupled with the print head.

Any of the wide variety of print heads known in the art may be employed in the present invention, so long as it comprises at least one nozzle which ejects ink droplets in response to control signals. It is preferred that the print head be of the piezoelectric type, more preferably an MICROCODER 32/16 liquid ink jet imaging print head, which is commercially available from Trident, Inc. of Brookfield, CT.

The control means 16 may be any of those known in the art to be capable of generating control signals. As shown in Figure 1, control means 16 preferably comprises a power source 16a, a voltage or current regulator 16b, a signal generator 16c, and a timing circuit 16d for determining the interval between firing signals. It is preferred that a voltage regulator be employed and that the signal generator generate signals initiated under software control. Control means amenable to the practice of this invention include computing devices such microprocessors, microcontrollers, capacitors, switches, circuits, logic gates, or equivalent logic devices. Preferred control means 16 include a personal computer coupled to a Trident 16-Channel Analog Driver Board, part number 016-7008-01, which is commercially available from Trident, Inc. The preferred driver board generates a control signal in the form of an RC time constant controlled waveform with a 14.5 µ second leading pulse followed by a 1.5 µ second off time and a 3.5 µ second trailing pulse. U.S. Patent Application Serial No. 08/823,718, filed March 25, 1997 and entitled "High Performance Impulse Ink Jet Method and Apparatus," discloses firing waveforms for ejecting ink from an ink jet nozzle and includes the preferred firing pulse of the present invention.

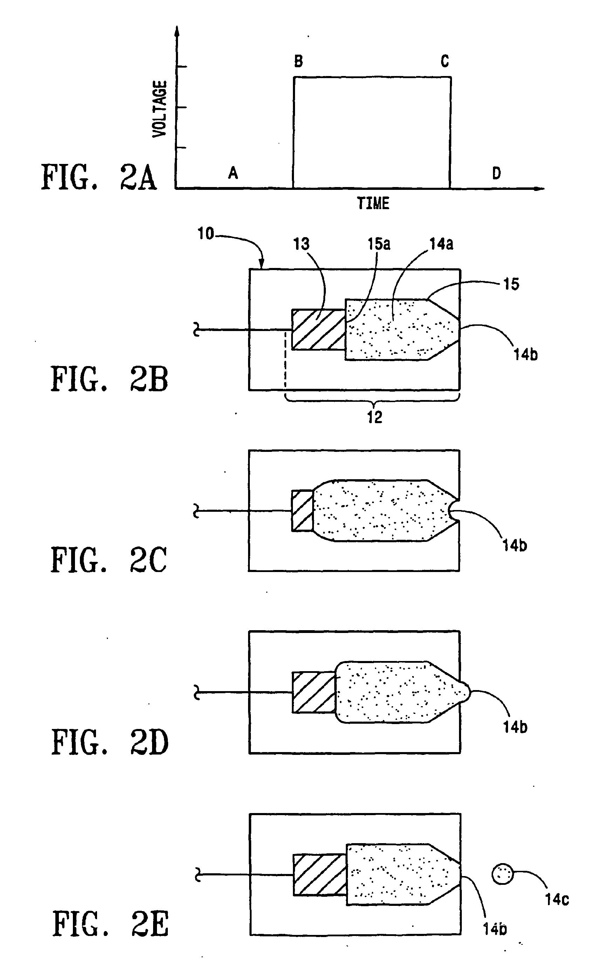

As shown in Figures 1 and 2A-2E, one or more ink droplets 14c can be ejected from the nozzles 12 toward substrate 20 by selectively energizing and de-energizing piezoelectric transducers 13. In preferred embodiments, each transducer 13 is attached to a membrane, sealant, or some other flexible member 15a in physical contact with a volume of ink 14a contained within chamber 15. The transducers are energized and de-energized through application of control signals. Although the control signal waveform could be selected from many known ink droplet firing signals, for brevity and simplicity of understanding, the firing control signal is shown in Figure 2A in the form of a square wave.

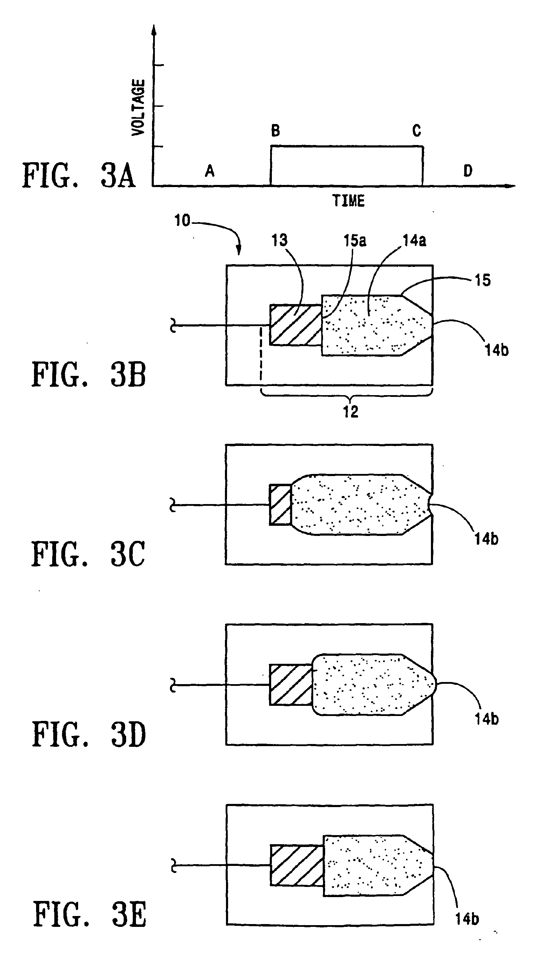

As discussed in the background section above, sub-pulsing techniques are known in the art whereby a signal of lesser amplitude is provided during quiescent periods to prevent the nozzle from clogging. Figures 3A-3E illustrated how the ink within a nozzle may react to a sub-pulse signal. As illustrated in Figure 3A, the sub-pulse signal is typically of smaller amplitude and shorter duration than a full drop-ejecting pulse. As such, the pulse is sufficient to move the ink within the nozzle without ejecting it therefrom. Such a technique has been used when a printer is in a quiescent state to prevent fast drying solvent based inks from drying out and clogging the nozzle. (See for example, U.S. Pat. No. 4,459,601 for a sub-pulsing scheme that applies pulses to the nozzle that are sufficient to move the ink within the nozzle and prevent clogging, but which are insufficient to eject ink droplets). The inventors believe, the sub-pulsing operates by constantly mixing the ink within the nozzle to maintain consistent viscosity.

In certain printing applications, it is advantageous to have an ink which has an extremely fast drying time. For some of the more fast drying inks, the mere application of sub-pulses would eventually increase the viscosity of the ink within the nozzle to a thick, unusable state. The present invention recognizes that allowing a fast-drying ink to dry in the nozzle forms a barrier of higher viscosity suspended solids between the nozzle orifice and the ink contained in chamber 15. The ink jet industry has generally tried to avoid such an effect because such a barrier would become a thick plug that would cause the nozzle to clog and operate inefficiently. Contradistinctly, the present invention utilizes this previously undesirable trait of fast-drying inks and uses it to a distinct advantage. In essence, by proper ink formulation, the barrier form in such a manner as to advantageous control the evaporation of solvents within the ink. The result is ink within the chamber that maintains a relatively constant viscosity. According to an aspect of the invention, an ink is formulated to have extremely fast-drying properties so that during the quiescent period a viscosity barrier rapidly forms at the orifice of the nozzle. Solvent and resin based inks, as described more fully, below, have demonstrated the desired properties.

Preferred ink compositions comprise a glycol ether having a low boiling point, i.e. below 150° C, preferably a glycol alkyl ether having about 3 to 20 carbon atoms, more preferably 3-7 carbon atoms, and most preferably 4 carbon atoms. The preferred glycol alkyl ether is propylene glycol methyl ether. Preferably, the glycol alkyl ether constitutes about 20 to 60 % by weight of the ink composition with about 44 % by weight being most preferred. Preferred ink compositions further comprise a ketone alcohol having about 1 to 10 carbon atoms. One preferred alcohol is diacetone alcohol. This component preferably constitutes 20 to 60 % by weight of the ink more preferably 35 to 45 %, and most preferably about 40.6 % by weight.

The preferred ink compositions of this invention further comprise at least one resin selected from polyester resins and acrylic resins, such as styrene acrylic resin. Preferably, the ink composition comprises about 1 to 20 % of an alcohol soluble polyester, more preferably about 5 to 10 %, and most preferably 6.3 %. One preferred alcohol soluble polyester is Prince 5180, manufactured by Lawter International, Northbrook, Ill. The ink composition preferably comprises about 1 to 10 % of a styrene acrylic polymer, more preferably 1 to 3 %, with 1.7 % being the most preferred. One preferred styrene acrylic polymer is Joncryl 678, available from S.C. Johnson & Son, Inc.

Preferred ink compositions also comprise a colorant. The choice of colorant and its concentration principally depend on the solubility of the colorant and the intensity of its color for a particular application. Preferably, the colorant is selected to render the ink composition visible to the human eye or some mechanical data collection device, such as a bar code scanner or other type of optical character reader. A preferred colorant comprises a dye such as Orasol Black RLI, which is available from Ciba-Geigy Co. of Ardsley, N.Y.

One particularly preferred ink that demonstrates the desired fast-drying properties has been prepared as follows:

| | |
|---|---|
| Propylene Glycol Methyl Ether | 44.0 % |
| Diacetone Alcohol | 40.6 % |
| Prince 5180 | 6.3% |
| Joncryl 678 | 1.7% |
| Orasol Black RLI | 7.4% |

The ink composition of this invention may further comprise one or more of the ink additives known in the art, so long as incorporation of the additives does not change the key drying properties as described in further detail below.

In accordance with the invention, the ink composition is selected so that a viscosity barrier of suspended solids, and which may actually become a solid, is allowed to form over the orifice of the nozzle during quiescent periods that exceed a predetermined time period, which is selected based on the ink formulation and other factors. Thereafter, when printing is requested, sub-pulsing is activated before printing can resume to remove the viscosity barrier by re-homogenizing it with fresh ink. While not wishing to be bound by any particular theory, it is believed that the theoretical explanation for the operation of the viscosity barrier is as described in further detail below.

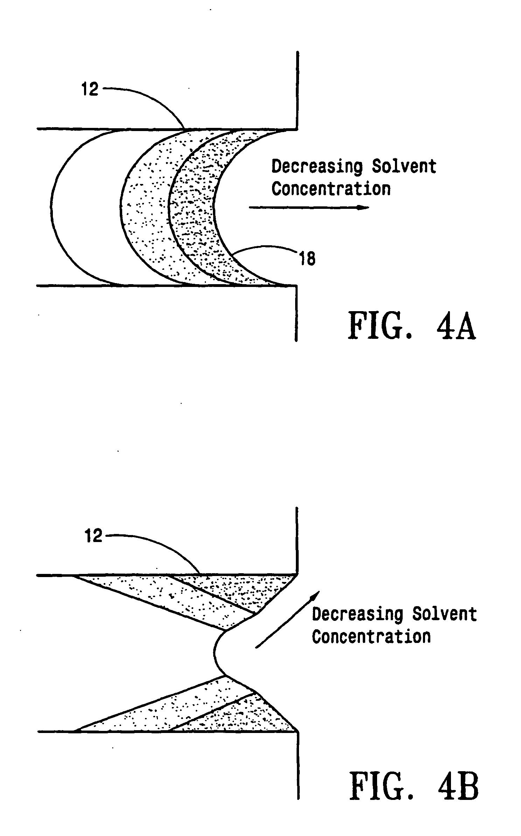

Without sub-pulsing, a solvent concentration gradient is rapidly formed at the surface of the ink in the nozzle orifice as the volatile solvent evaporates (see Figure 4A). Formation of this viscosity gradient or barrier 18 dramatically slows the rate of solvent loss from nozzle 12. Unlike many inks, with a properly selected ink, such as the fonnulation described above, re-homogenization readily occurs under perturbing action of the sub-pulse. Thus, by first sub-pulsing a nozzle containing the fast-drying ink, a nozzle 12 that has been dormant for an hour or more can be successfully fired again after a few seconds of sub-pulsing.

By contrast, if a constant sub-pulsing system is applied to such a fast drying ink, such as the preferred ink described above, the ink viscosity within nozzle 12 will rise too high and produce poor print performance. In such a system, it is believed that the sub-pulsing generates eddy currents which agitate the ink in nozzle 12, maintaining it homogeneity. As a result, fresh solvent is continuously being presented at the nozzle orifice and no viscosity gradient is formed. Over extended periods of sub-pulsing, the solvent level in nozzle 12 becomes extremely depleted causing the viscosity of the ink to rise significantly, especially at the edges of nozzle 12 where the sub-pulsing has the least effect (see Figure 4B).

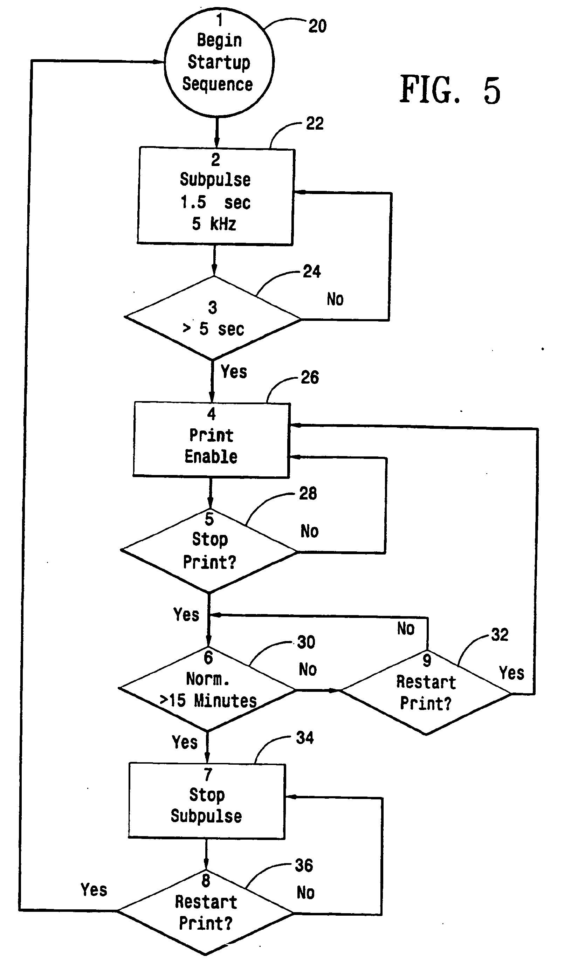

The preferred sequence of steps to employ the viscosity barrier and the sub-pulsing are shown in the flow chart of Figure 5. The startup sequence begins whenever a nozzle has been idle for an extended period of time (step 20). After startup, nozzle 12 is sub-pulsed for a predetermined period. Preferably, the sub-pulses have a pulse width of about 1.5 µ seconds and have a frequency of about 5 kHz (step 22). The sub-pulse amplitude is selected to move the ink yet insufficient to eject the ink from nozzle 12. The particular sub-pulse parameters were selected to operate effectively with the preferred ink. Other parameters may be substituted and produce similar results, particularly where the ink formulation is different from the preferred ink disclosed herein. The predetermined period of sub-pulsing time is the time required to ensure that the ink in the nozzle is re-homogenized with fresh ink from the chamber. It has been determined that 5 seconds is sufficient time to break-down the viscosity barrier that is formed by the preferred ink formulation described above. Of course, other re-homogenization periods could be used depending on the particular characteristics of the ink selected and the quality of operation desired. After the 5 second period (step 24), the print function of the nozzle is enabled (step 26). The nozzle is then available to eject droplets on demand until printing is complete and returns to a quiescent state (step 28).

While the printer is active and for a period thereafter, sub-pulsing of the ink can continue to maintain a constant viscosity of the ink as with constant sub-pulsing system. That is, just as with constant sub-pulsing systems, the system disclosed herein contemplates that the printer can remain enabled with constant sub-pulsing on for some predetermined period of time without clogging the nozzle or raising the ink viscosity to an unusable level. However, if the printer remains idle for an extended period (about 15 minutes in the present example), the sub-pulsing should cease, allowing the viscosity barrier 18 to form over the orifice (see also Figure 4A). Accordingly, a timer is set for about 15 minutes during which time printing can restart on demand (steps 30, 32). After that time has expired, sub-pulsing is stopped and restarting requires completion of the start-up sequence to re-homogenize the viscosity barrier (steps 34, 36).

Those skilled in the art will appreciate that numerous changes and modifications may be made to the preferred embodiments of the invention and that such changes and modifications may be made without departing from the invention as defined in the appended claims. For example, instead of generating control signals as in the present invention by modulating the amplitude of applied electric energy, it may be possible generate such signals by modulating applied light energy or heat. Moreover, other fast drying inks using completely different formulations could be used, so long as they exhibit the desired fast-drying properties.

## Claims

1. An impulse ink jet printer, comprising:
- at least one nozzle (12) for ejecting droplets of ink (14c) in response to firing signals having a predetermined parameter which is effective to eject ink droplets ;
- a chamber (15) disposed in said nozzle (12),
- an ink (14a) contained in said chamber (15);
- means (16d) for determining that a quiescent period has occurred in which said ink (14a) was substantially stagnant;
- means (16c), in communication with said means (16d) for determining, for generating control signals comprising the firing signals and sub-firing signals;
**characterized in that**
- said ink (14a) is a chemical solvent based ink composition comprising a colorant, a glycol ether having a boiling point below 150 °C, a ketone alcohol, and at least one resin selected from the group consisting of polyester resins and styrene acrylic resins;
- wherein the chemical solvent evaporates at a rate that forms a viscosity barrier when exposed to air for a predetermined period of time such that ink (14a) disposed behind the barrier maintains a substantially constant predetermined viscosity;
- said means (16c) for generating control signals is adapted to generate a plurality of sub-firing signals having a parameter which is effective to perturb the ink (14a) so that the barrier is re-homogenized into the ink (14a) yet which is ineffective to eject ink droplets, so as to remove the barrier from the nozzle (12) before ejecting droplets of ink (14a) after said means (16d) for determining determines that a quiescent period has occurred.

2. The impulse ink jet printer of claim 1 wherein said predetermined parameter is at least one of time and amplitude.

3. The impulse ink jet printer of claim 1 or 2 wherein said sub-firing signals have a sufficient amplitude to perturb the ink (14a) within the nozzle (12) without ejecting the ink (14a) therefrom so as to rehomogenize the ink (14a) within the nozzle (12) with fresh ink (14a) from the chamber (15).

4. A method of operating an inkjet printer which comprises at least one nozzle (12) for ejecting ink droplets from an ink chamber (15) in response to a firing signals of controlled amplitude,
wherein
said ink (14a) is a chemical solvent based ink composition comprising a colorant, a glycol ether having a boiling point below 150°C, a ketone alcohol, and at least one resin selected from the group consisting of polyester resins and styrene acrylic resins; and
said method comprises the steps of:
- exposing ink (14a) contained in said nozzle (12) to air such that the chemical solvent evaporates to form a viscosity barrier proximate the end of said nozzle (12) isolating the ink (14a) from the air;
- generating a plurality of sub-firing signals of controlled amplitude, said sub-firing signals having a parameter which is effective to perturb the ink (14a) so that the barrier is re-homogenized into the ink (14a) yet which is ineffective to eject ink droplets; and
- after the barrier has been re-homogenized, generating a firing signal having a parameter which is effective to eject ink droplets.

5. The method of claim 4, wherein the step of generating a plurality of sub-firing signals is performed after a quiescent period in which the ink was substantially stagnant and before the step of generating a firing signal.

6. The method of claim 4 or 5, wherein the step of generating a plurality of sub-firing signals continues for at least about 5 seconds.

7. The impulse ink jet printer of at least one of claims 1 to 3 or the method of at least one of claims 4 to 6, wherein the glycol ether comprises propylene glycol methyl ether.

8. The impulse ink jet printer or the method of claim 7 wherein the propylene glycol methyl ether constitutes about 44 % by weight of the ink (14a).

9. The impulse ink jet printer of at least one of claims I to 3, 7, 8, or the method of at least one of claims 4 to 8 wherein the ketone alcohol comprises diacetone alcohol.

10. The impulse ink jet printer or the method of claim 9 wherein the diacetone alcohol constitutes about 40.6 % by weight of the ink (14a).

11. The impulse ink jet printer of at least one of claims 1 to 3, 7 to 10 or the method of at least one of claims 4 to 10 wherein the ink comprises a polyester resin constituting about 6.3 % by weight of the ink (14a).

12. The impulse ink jet printer of at least one of claims 1 to 3, 7 to 11 or the method of at least one of claims 4 to 11 wherein the ink comprises a styrene acrylic resin constituting about 1.7 % by weight of the ink (14a).

## Patentansprüche

1. Impulstintenstrahldrucker, der Folgendes umfasst:
- mindestens eine Düse (12) zum Ausstoßen von Tintentropfen (14c) als Reaktion auf Aktivierungssignale mit einem vorbestimmten Parameter, der zum Ausstoßen von Tintentropfen wirkt;
- eine in der Düse (12) angeordnete Kammer (15),
- eine in der Kammer (15) enthaltende Tinte (14a),
- ein Mittel (16d) zur Bestimmung, dass eine Ruheperiode aufgetreten ist, während der die Tinte (14a) im Wesentlichen stagnierend war;
- ein mit dem Bestimmungsmittel (16d) in Verbindung stehendes Mittel (16c) zur Erzeugung von die Aktivierungssignale und Unteraktivierungssignale umfassenden Steuersignalen;
**dadurch gekennzeichnet, dass**
- die Tinte (14a) eine auf einem chemischen Lösungsmittel basierende Tintenzusammensetzung ist, die einen Farbstoff, einen Glykolether, der einen Siedepunkt von unter 150°C aufweist, einen Ketonalkohol und mindestens ein aus der Gruppe bestehend aus Polyesterharzen und Styrolacrylharzen ausgewähltes Harz umfasst;
- wobei das chemische Lösungsmittel mit einer Rate verdunstet, die eine Viskositätssperre bildet, wenn es für eine vorbestimmte Zeitdauer Luft ausgesetzt ist, so dass hinter der Sperre angeordnete Tinte (14a) eine im Wesentlichen konstante vorbestimmte Viskosität behält;
- das Mittel (16c) zur Erzeugung von Steuersignalen dazu ausgelegt ist, mehrere Unteraktivierungssignale mit einem Parameter zu erzeugen, der dahingehend wirkt, die Tinte (14a) zu stören, so dass die Sperre zu der Tinte (14a) rehomogenisiert wird, der jedoch dahingehend unwirksam ist, Tintentropfen auszustoßen, um die Sperre von der Düse (12) zu entfernen, bevor Tropfen von Tinte (14a) ausgestoßen werden, nachdem das Bestimmungsmittel (16d) bestimmt, dass eine Ruheperiode aufgetreten ist.

2. Impulstintenstrahldrucker nach Anspruch 1, bei dem der vorbestimmte Parameter Zeit und/oder Amplitude ist.

3. Impulstintenstrahldrucker nach Anspruch 1 oder 2, bei dem die Unteraktivierungssignale eine ausreichende Amplitude aufweisen, um die Tinte (14a) in der Düse (12) zu stören, ohne die Tinte (14a) daraus auszustoßen, um die Tinte (14a) in der Düse (12) mit frischer Tinte (14a) aus der Kammer (15) zu rehomogenisieren.

4. Verfahren zum Betrieb eines Tintenstrahldruckers, der mindestens eine Düse (12) zum Ausstoßen von Tintentropfen aus einer Tintenkammer (15) als Reaktion auf Aktivierungssignale mit gesteuerter Amplitude umfasst,
bei dem
die Tinte (14a) eine auf einem chemischen Lösungsmittel basierende Tintenzusammensetzung ist, die einen Farbstoff, einen Glykolether, der einen Siedepunkt von unter 150°C aufweist, einen Ketonalkohol und mindestens ein aus der Gruppe bestehend aus Polyesterharzen und Styrolacrylharzen ausgewähltes Harz umfasst; und
wobei bei dem Verfahren:
- in der Düse (12) enthaltene Tinte (14a) Luft ausgesetzt wird, so dass das chemische Lösungsmittel unter Bildung einer Viskositätssperre nahe dem Ende der Düse (12), die die Tinte (14a) von der Luft trennt, verdunstet;
- mehrere Unteraktivierungssignale mit gesteuerter Amplitude erzeugt werden, wobei die Unteraktivierungssignale einen Parameter aufweisen, der dahingehend wirkt, die Tinte (14a) zu stören, so dass die Sperre zu der Tinte (14a) rehomogenisiert wird, der jedoch dahingehend unwirksam ist, Tintentropfen auszustoßen; und
- nach dem Rehomogenisieren der Sperre ein Aktivierungssignal mit einem Parameter, der zum Ausstoßen von Tintentropfen wirkt, erzeugt wird.

5. Verfahren nach Anspruch 4, bei dem der Schritt des Erzeugens von mehreren Unteraktivierungssignalen nach einer Ruheperiode, während der die Tinte im Wesentlichen stagnierend war, und vor dem Schritt des Erzeugens eines Aktivierungssignals durchgeführt wird.

6. Verfahren nach Anspruch 4 oder 5, bei dem der Schritt des Erzeugens mehrerer Unteraktivierungssignale für mindestens ca. 5 Sekunden anhält.

7. Impulstintenstrahldrucker nach mindestens einem der Ansprüche 1 bis 3 oder Verfahren nach mindestens einem der Ansprüche 4 bis 6, bei dem der Glykolether Propylenglykolmethylether umfasst.

8. Impulstintenstrahldrucker oder Verfahren nach Anspruch 7, bei dem der Propylenglykolmethylether ca. 44 Gew.-% der Tinte (14a) ausmacht.

9. Impulstintenstrahldrucker nach mindestens einem der Ansprüche 1 bis 3, 7, 8 oder Verfahren nach mindestens einem der Ansprüche 4 bis 8, bei dem der Ketonalkohol Diacetonalkohol umfasst.

10. Impulstintenstrahldrucker oder Verfahren nach Anspruch 9, bei dem der Diacetonalkohol ca. 40,6 Gew.-% der Tinte (14a) ausmacht.

11. Impulstintenstrahldrucker nach mindestens einem der Ansprüche 1 bis 3, 7 bis 10 oder Verfahren nach mindestens einem der Ansprüche 4 bis 10, bei dem die Tinte ein Polyesterharz umfasst, das ca. 6,3 Gew.-% der Tinte (14a) darstellt.

12. Impulstintenstrahldrucker nach mindestens einem der Ansprüche 1 bis 3, 7 bis 11 oder Verfahren nach mindestens einem der Ansprüche 4 bis 11, bei dem die Tinte ein Styrolacrylharz umfasst, das ca. 1,7 Gew.-% der Tinte (14a) ausmacht.

## Revendications

1. Imprimante à jet d'encre par impulsions, comprenant:
- au moins une buse (12) pour éjecter des gouttelettes d'encre (14c) en réponse à des signaux de déclenchement présentant un paramètre prédéterminé efficace pour éjecter des gouttelettes d'encre;
- une chambre (15) disposée dans ladite buse (12);
- une encre (14a) contenue dans ladite chambre (15);
- des moyens (16d) pour déterminer qu'une période de repos a eu lieu au cours de laquelle ladite encre (14a) était essentiellement stagnante;
- des moyens (16c), en communication avec lesdits moyens de détermination (16d), pour générer des signaux de commande comprenant les signaux de déclenchement et des signaux de déclenchement secondaire;
**caractérisée en ce que**:
- ladite encre (14a) est une composition d'encre à base de solvant chimique comprenant un colorant, un éther glycolique dont le point d'ébullition est inférieur à 150°C, un alcool cétonique, et au moins une résine sélectionnée dans le groupe comprenant des résines polyesters et des résines acryliques styrènes;
- dans laquelle le solvant chimique s'évapore à une certaine vitesse pour former une barrière de viscosité lorsqu'il est exposé à l'air pendant une période de temps prédéterminée, de telle sorte que l'encre (14a) disposée derrière la barrière conserve une viscosité prédéterminée essentiellement constante;
- lesdits moyens (16c) pour générer des signaux de commande sont adaptés pour générer une pluralité de signaux de déclenchement secondaire présentant un paramètre efficace pour perturber l'encre (14a) de telle sorte que la barrière soit ré-homogénéisée dans l'encre (14a), mais inefficace pour éjecter des gouttelettes d'encre, de manière à éliminer la barrière de la buse (12) avant l'éjection de gouttelettes d'encre (14a) après que lesdits moyens de détermination (16d) aient déterminé qu'une période de repos a eu lieu.

2. Imprimante à jet d'encre par impulsions selon la revendication 1, dans laquelle ledit paramètre prédéterminé est au moins soit le temps, soit l'amplitude.

3. Imprimante à jet d'encre par impulsions selon la revendication 1 ou 2, dans lequel lesdits signaux de déclenchement secondaire présentent une amplitude suffisante pour perturber l'encre (14a) à l'intérieur (12) sans éjecter l'encre (14a) hors de celle-ci de façon à ré-homogénéiser l'encre (14a) à l'intérieur de la buse (12) avec de l'encre fraîche (14a) provenant de la chambre (15).

4. Procédé de commande d'une imprimante à jet d'encre comprenant au moins une buse (12) pour éjecter des gouttelettes d'encre à partir d'une chambre d'encre (15) en réponse à des signaux de déclenchement d'amplitude commandée, dans lequel ladite encre (14a) est une composition d'encre à base de solvant chimique comprenant un colorant, un éther glycolique dont le point d'ébullition est inférieur à 150°C, un alcool cétonique, et au moins une résine sélectionnée dans le groupe comprenant des résines polyesters et des résines acryliques styrènes; et ledit procédé comprenant les étapes suivantes:
- exposer l'encre (14a) contenue dans ladite buse (12) à l'air de telle sorte que le solvant chimique s'évapore pour former une barrière de viscosité à proximité de l'extrémité de ladite buse (12) isolant l'encre (14a) de l'air;
- générer une pluralité de signaux de déclenchement secondaire présentant un paramètre efficace pour perturber l'encre (14a) de telle sorte que la barrière soit ré-homogénéisée dans l'encre (14a), mais inefficace pour éjecter des gouttelettes d'encre; et
- une fois que la barrière a été ré-homogénéisée, générer un signal de déclenchement présentant un paramètre efficace pour éjecter des gouttelettes d'encre.

5. Procédé selon la revendication 4, dans lequel l'étape de génération d'une pluralité de signaux de déclenchement secondaire est exécutée après une période de repos pendant laquelle l'encre était essentiellement stagnante et avant l'étape de génération d'un signal de déclenchement.

6. Procédé selon la revendication 4 ou 5, dans lequel l'étape de génération d'une pluralité de signaux de déclenchement secondaire continue pendant au moins environ 5 secondes.

7. Imprimante à jet d'encre par impulsions selon au moins une des revendications 1 à 3, ou procédé selon au moins une des revendications 4 à 6, dans laquelle/lequel l'éther glycolique comprend de l'éther méthylique de propylène glycol.

8. Imprimante à jet d'encre par impulsions ou procédé selon la revendication 7, dans laquelle/lequel l'éther méthylique de propylène glycol constitue environ 44 % en poids de l'encre (14a).

9. Imprimante à jet d'encre par impulsions selon au moins une des revendications 1 à 3, 7 et 8, ou procédé selon au moins une des revendications 4 à 8, dans laquelle/lequel l'alcool cétonique comprend l'alcool diacétonique.

10. Imprimante à jet d'encre par impulsions ou procédé selon la revendication 9, dans laquelle/lequel l'alcool diacétonique constitue environ 40,6 % en poids de l'encre (14a).

11. Imprimante à jet d'encre par impulsions selon au moins une des revendications 1 à 3, 7 à 10, ou procédé selon au moins une des revendications 4 à 10, dans laquelle/lequel l'encre comprend une résine polyester constituant environ 6,3 % en poids de l'encre (14a).

12. Imprimante à jet d'encre par impulsions selon au moins une des revendications 1 à 3, 7 à 11, ou procédé selon au moins une des revendications 4 à 11, dans laquelle/lequel l'encre comprend une résine acrylique styrène constituant environ 1,7 % en poids de l'encre (14a).
